# EUROPEAN PATENT SPECIFICATION

(11) **EP 2 825 449 B1**
(45) Date of publication and mention of the grant of the patent: **12.09.2018**
(21) Application number: 13709219.3
(22) Date of filing: 15.03.2013
(51) Int. Cl.: B64C 1/20

(54) **AIRCRAFT FUSELAGE STRUCTURE COMPRISING TRANSVERSE PROFILES AND FRAMEWORK STRUCTURE**
FLUGZEUGRUMPFSTRUKTUR MIT TRANSVERSALEN PROFILEN UND EINER TRAGWERKSTRUKTUR
STRUCTURE DE FUSELAGE D'AVION COMPRENANT DES PROFILS TRANSVERSAUX ET UNE STRUCTURE D'ARMATURE

(30) Priority: 16.03.2012 DE 102012005353; 16.03.2012 US 201261611839 P
(43) Date of publication of application: 21.01.2015
(73) Proprietor: Airbus Operations GmbH, 21129 Hamburg (DE)
(72) Inventor: BENTHIEN, Hermann, 27367 Sottrum (DE); KRUSE, Michael, 28876 Oyten (DE)
(74) Representative: Bird & Bird LLP
(86) International application number: PCT/EP2013/055322
(87) International publication number: WO 2013/135855

(56) References cited:
- EP-A2- 1 481 894
- WO-A1-2006/051235
- WO-A2-2009/118256
- DE-A1-102010 014 638

## Description

The present invention relates to an aircraft fuselage structure which extends along a longitudinal axis and has an outer skin which is provided with a plurality of ribs extending at intervals from one another in planes perpendicular to the longitudinal axis along the outer skin, comprising a floor extending in a plane parallel to the longitudinal axis, said floor comprising retaining rails extending parallel to the longitudinal axis, between which floor plates are arranged, comprising support elements which extend in the plane of the ribs between the floor and the ribs, wherein the retaining rails extend across a plurality of support elements, wherein lashing devices are arranged on the retaining rails above the support elements, wherein the lashing devices are connected to the support elements.

In principle, in aircraft construction a differentiation is made between the primary structure and the secondary structure, wherein the primary structure is the structure of the aircraft bearing the aircraft and it has to be verified in a costly manner via large component tests, for example of the entire fuselage of the aircraft, that the primary structure withstands the expected loading during flight. In such approval tests, all possible scenarios have to be considered of loads which could be potentially introduced into the primary structure.

In conventional transport aircraft, the floors extending through the fuselage parallel to a horizontal longitudinal plane, i.e. in the X-Y plane, do not form part of the primary structure. This is achieved, in particular for the lower floor of the cargo area, by a so-called grid being formed in the lower part of the fuselage below said floor, which has longitudinal members extending in the longitudinal direction (X-direction) and crossmembers extending transversely to the longitudinal axis of the fuselage, i.e. in the Y-direction. The crossmembers are thus connected to the ribs or even formed integrally therewith, said ribs circulating around the outer skin in planes perpendicular to the longitudinal axis. The elements of the floor are attached to the crossmembers and longitudinal members.

Whilst the "grid" is part of the primary structure, the floor forms part of the secondary structure. However, loads introduced into the floor and running in the X-direction and Y-direction are absorbed by the longitudinal members and crossmembers.

DE 103 24 648 B4 and/or US 2004/0258498 describe a flexurally rigid cargo floor which has retaining rails with lashing devices extending in the X-direction, which serve to fix cargo to the floor. The lashing devices are fastened to transverse profiles extending in the lower region of the cargo area in the Y-direction, so that loads and forces introduced via lashing devices are diverted by the transverse profiles into the supporting structure, whilst the loads extending in the X-direction are in turn absorbed by the lashing point channels and/or retaining rails of the floor. The transverse profiles thus also have to absorb moments in the Y-direction and have to be designed accordingly and/or have a corresponding rigidity.

A coupling of the lashing devices to the support elements extending transversely in the lower region through the cargo area is disclosed in DE 10 2007 011 611 A1 and/or US 2008/0175685 as well as DE 10 2009 002 745 A1, in which the base of the lashing devices is fastened by two bolts to the support elements, wherein the bolts extend in the central plane of the support elements.

Proceeding from the prior art, it is the object of the present invention to provide an aircraft fuselage structure of the type described in the introduction, which is configured such that loads oriented in the Y-direction, caused by the loading, are absorbed by the elements of the floor and not introduced into the support elements.

This object is achieved in that the retaining rails and the floor plates are fixedly connected together for transmitting loads in the plane of the floor, in that the support elements have transverse profiles extending directly below the floor in the planes of the ribs, said transverse profiles extending in a linear manner between the ribs between connecting points therewith, on which the retaining rails bear and to which the lashing devices are connected, in that the transverse profiles are at intervals from the ribs between the connecting points on the side thereof facing away from the floor, and in that on the side of the transverse profiles facing away from the floor, struts extend between the transverse profiles and the ribs in the plane thereof.

In the construction according to the invention of the fuselage structure, the support element is less torsionally stiff as it has a transverse profile extending at a distance from the bottom portion. As a result, moments which run in the Y-direction, i.e. parallel to the direction of extension of the transverse profiles, are not able to be absorbed via the lashing devices and the connection thereof to the transverse profiles. Such moments occur on the lashing devices when fixing the cargo to the floor and/or due to inertial forces which act on the cargo.

In the fuselage structure according to the invention, said moments are absorbed by the lashing devices via the retaining rails and the floor plates, fixedly connected thereto, of the floor which is configured to be torsionally stiff. This is associated with the advantage that the transverse profile forming part of the primary structure and/or support element does not have to be designed to have to absorb loads caused by the cargo and occurring on the lashing devices.

Moreover, the embodiment according to the invention of the support of the floor is advantageous because when testing the primary structure, which also comprises the transverse profiles, the loads produced during the loading do not have to be considered with regard to the loads which occur during the flight. In the structure according to the invention, these loads are almost completely absorbed by the secondary structure, which comprises the floor, and diverted over a large surface area without a local concentration of load on the primary structure, so that they no longer have to be taken into account in the design thereof.

A further advantage, due to the fact that only the struts are present between the transverse profile and the ribs, is that systems such as conduits and the like may be laid without great difficulty below the floor.

On the other hand, the struts extending between the transverse profile and the rib portion located below the floor ensure that loads running in the Z-direction, i.e. substantially those which are due to the weight of the cargo, are introduced into the ribs.

In this case, it is particularly advantageous if first struts are provided below the points at which lashing devices are arranged above the transverse profile, extending perpendicular thereto.

In addition to the first struts extending perpendicular to the transverse profile, it is also advantageous if second struts are optionally provided, extending at an angle of less than 90° to the transverse profile.

In this construction, vertical loads in the Z-direction are forwarded via a "flexible member" in the Y-direction formed from the rib, transverse profile and struts, to the sides of the aircraft fuselage, in order to transmit the inertial loads to the wings and/or framework. In principle, a flexible member consists of a lower flange and an upper flange and a shear panel therebetween. In this preferred embodiment, said shear panel is replaced by the framework consisting of struts. If this virtual flexible member, as implemented by the present embodiment, is particularly rigid in the Z-direction, (the transition between the floor and the perpendicular part of the ribs) it is possible to attach it at its ends in a partially articulated manner, which results in lower restraining moments and a reduction in the weight of the ribs. In particular, the loads are not directly introduced in the vertical direction (Z-direction) in the lower portion of the ribs, but in the lateral portion thereof extending partially vertically. As a result, the moments in the X-direction which are exerted by the loading via the floor onto the ribs and are produced in addition to those which already result from the internal pressure in a pressure fuselage, are minimized.

In a preferred embodiment, the retaining rails have a base portion extending in the plane of the floor which bears on the transverse profiles, and two limbs extending perpendicular to the plane of the floor and connected to the base portion, wherein the lashing devices have a base which is connected at two fastening points to the limbs in the direction of extension of the retaining rails, and wherein the longitudinal central plane of the transverse profiles extends between the fastening points. By means of the fastening points at intervals in the direction of extension of the retaining rails, it is achieved that moments introduced in the Y-direction via the lashing devices are forwarded into the retaining rails.

When, in a further preferred manner, the base of the lashing devices is connected to a transverse profile via bolts extending in the longitudinal central plane of the transverse profiles, said bolts engaging with the transverse profile, the moments in the Y-direction are only introduced to a small extent into the transverse profiles.

The present invention is described hereinafter with reference to the drawings, in which only one preferred exemplary embodiment of an aircraft fuselage structure according to the invention is shown, wherein
- Fig. 1: shows the lower part of the exemplary embodiment of the aircraft fuselage structure,
- Fig. 2: shows a cross section in the longitudinal direction through the aircraft fuselage of Fig. 1,
- Fig. 3: shows the connection between the lashing device, retaining rail and transverse profile in a cross section perpendicular to the longitudinal direction,
- Fig. 4: shows a cross section parallel to the longitudinal direction through a transverse profile of the exemplary embodiment of Fig. 1,
- Fig. 5: shows the connection between the lashing device, retaining rail and transverse profile in a cross section parallel to the longitudinal direction, and
- Fig. 6: shows an enlarged view of the connection of Fig. 5.

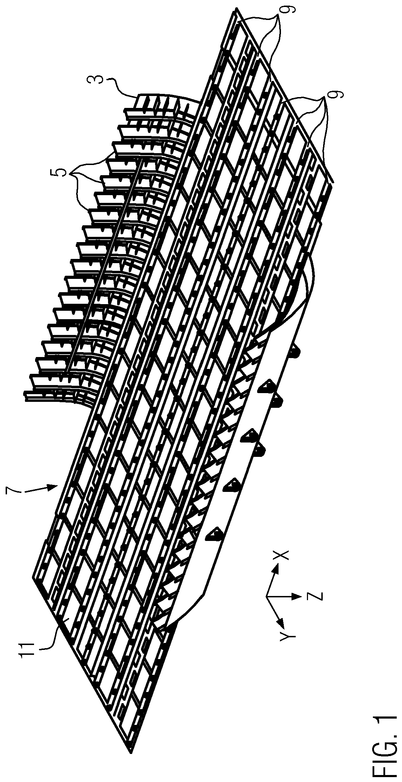

As Fig. 1 shows, the exemplary embodiment of an aircraft fuselage structure 1 according to the invention has an outer skin 3 along which a plurality of ribs 5 extend at intervals from one another in planes perpendicular to the longitudinal axis X of the fuselage. In the lower region of the fuselage structure 1 a floor 7 is arranged which extends in a horizontal plane, i.e. the X-Y plane.

When reference is made hereinafter to directions denoted by X, Y or Z, the usual coordinate system in aircraft construction is used in which the X-direction extends in the longitudinal direction of the fuselage from front to back, the Y-direction in the direction of extension of the support surfaces and the Z-direction perpendicular to the X-direction and Y-direction. For clarification, said coordinate system is illustrated in Fig. 1.

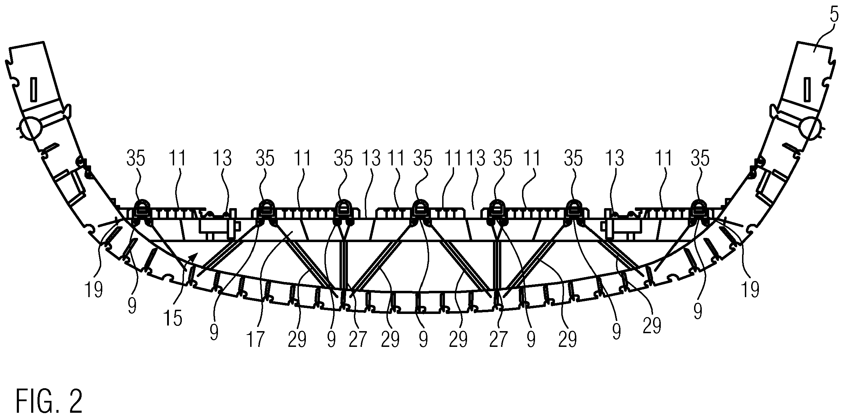

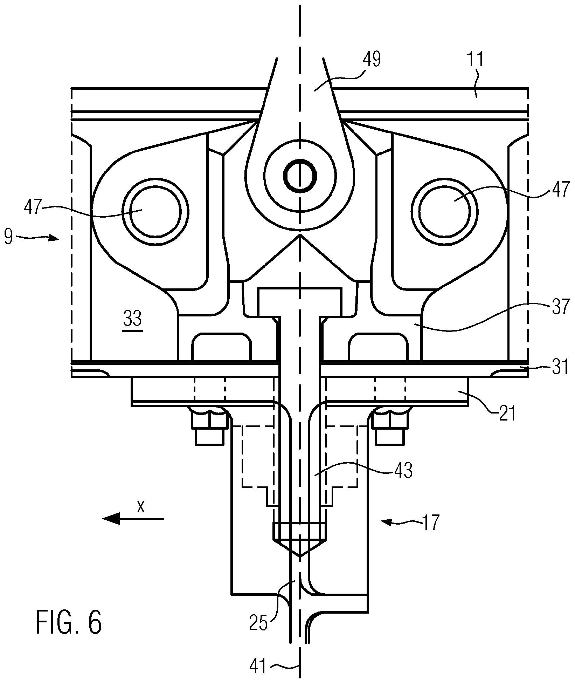

The floor 7 has a plurality of retaining rails 9 extending parallel to the longitudinal axis X, between which floor plates 11 are arranged and which are fastened together by an overlapping connection (see Fig. 6). As in particular Fig. 2 shows, the retaining rails 9 and the floor elements 11 are fixedly connected together, wherein in addition to the retaining rails 11 further guide rails 13 extend parallel to the longitudinal direction X in the plane of the floor 7 and are also fixedly connected to the floor elements 11, so that simply the arrangement consisting of retaining rails 9, floor elements 11 and guide rails 13 forms a structure which is torsionally rigid per se.

The floor 7 is supported by support elements 15 which extend in planes spanned by the ribs 5. The support elements 15 firstly have a transverse profile 17 extending directly below the floor 7 in the plane of the rib (see Fig. 2). The transverse profiles 17 extend between connecting points 19 with the ribs 5 in a linear manner, wherein the transverse profiles 17 in the region between the connecting points 19 are spaced apart from the ribs 5. A free space is thus formed between the side of the transverse profiles 17 remote from the floor 7 and the ribs 5.

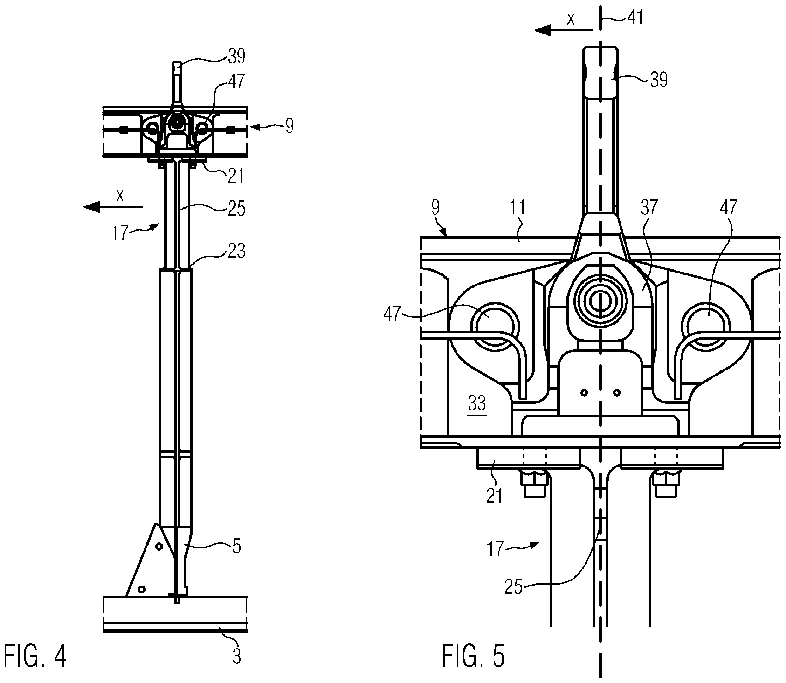

As may be seen from Fig. 4, in the described preferred exemplary embodiment, the transverse profiles 17 have an upper flange 21 and a lower flange 23 between which a web 25 extends perpendicular thereto.

Moreover, struts 27, 29 are provided between the transverse profiles 17 and the ribs 5, said struts connecting a rib 5 to the transverse profile 17 extending in the plane thereof, and in this case extending in the plane of the rib 5 (see Fig. 2).

In the preferred exemplary embodiment described here, first and second struts 27, 29 are present, wherein the first struts 27 extend perpendicular to the transverse profiles 17, whilst the second struts 29 extend at an angle of less than 90° between the transverse profile 17 and the rib 5. Thus, a framework structure is formed.

Thus the free space remaining between the transverse profiles 17 and the ribs 5 is substantially unobstructed and permits the installation of system technology, so that said region may be used in an effective manner.

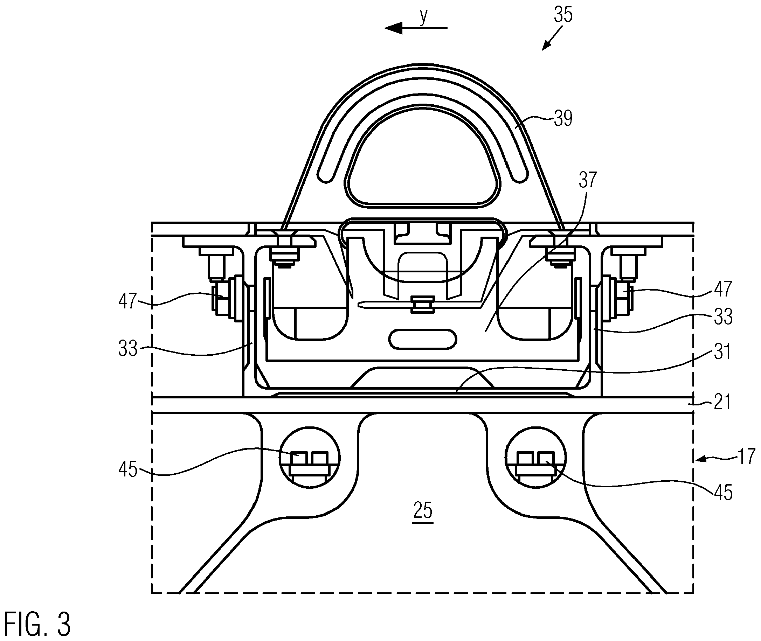

As already revealed from Fig. 1, the retaining rails 9 are of such a length that they extend across a plurality of support elements 15 and/or transverse profiles 17, wherein they bear directly thereagainst. In the exemplary embodiment described here, the retaining rails 9 are constructed such that they have a base portion 31 extending in the plane of the floor 7 which bears against the transverse profiles 17, and two limbs 33 extending perpendicular to the plane of the floor 7, which are connected to the base portion 31 (see Fig. 3).

Above the transverse profiles 17 lashing devices 35 are arranged on the retaining rails 9, said lashing devices having a base 37 fixedly connected to the retaining rail 9 and the transverse profiles 17 arranged thereunder. In turn, a lashing eye 39 is pivotably articulated on the base 37, through which straps or the like may be passed, in order to fix the cargo to the floor 7, wherein in this case, amongst other things, forces in the X-direction but also moments in the Y-direction act on the base 37.

The base of the lashing devices 35 is in this case firstly connected to the transverse profiles 17 in a manner such that two bolts 43 extending in the longitudinal central plane 41 of the transverse profile 17 engage with barrel nuts 45 extending through bores in the web 25, wherein the bolts 43 pass through the base portion 31 of the retaining rails 9. As a result, the retaining rails 9 are secured at the same time to the transverse profiles 17.

Secondly, on both ends of the base 37 facing the limbs 33 of the retaining rails 9, bores are provided through which transverse bolts 47 extend into the limbs 33. In this case, in each case two transverse bolts 47 are provided on both limbs 33 said bolts being arranged such that a longitudinal central plane 41 of the transverse profiles 17 extends between the transverse bolts 45 and thus between the fastening points. The lashing devices 35 are thus fixedly connected both to the retaining rails 9 and to the transverse profiles 17 and/or support elements 15.

Finally, it may be seen from Fig. 2 that the first struts 27 extending perpendicular to the transverse profiles 17 are arranged such that they extend downwards away from points directly below the retaining rails 9 and/or the lashing devices 35, in order to guide loads into the ribs 5, introduced into the retaining rails 9 and extending in the Z-direction.

In the construction according to the invention, the support elements 15 have transverse profiles 17 which are supported by the first and second struts 27, 29, in order to absorb loads in the Z-direction. In this case, the transverse profiles 17 and thus all the support elements 15 have a reduced rigidity relative to moments extending in the Y-direction, which are substantially caused by forces acting on the lashing devices 35.

As the lashing devices 35 are connected to the transverse profiles 17 only by bolts 43 extending in the longitudinal central plane 41 of the transverse profiles 17 and/or in the plane of the webs 25, moreover, the connection between the lashing devices 35 and the transverse profiles 17 also does not have high torsional rigidity for moments in the Y-direction, whereby the coupling of the transverse profiles 17 to the lashing devices 35 is further reduced.

In contrast thereto, however, due to the transverse bolts 47 which are arranged on both sides of the longitudinal central plane 41, the lashing devices 35 are connected in a torsionally rigid manner to the retaining rails 9 relative to these moments in the Y-direction and thus, via the fixed connection thereof to the floor plates 11, connected to the floor 7 as a whole.

This has the result that the inertial forces acting on the cargo and the resulting moments in the Y-direction are not absorbed by the transverse profiles 7 forming the primary structure, but introduced as a whole into the floor 7 forming part of the secondary structure.

On the other hand, however, the struts 27, 29 extending between the transverse profile 17 and the rib portion 5 located below the floor 7, ensure that loads running in the Z-direction, i.e. substantially those which result from the weight of the cargo, are introduced into the ribs 5 so that only small moments act thereon in the X-direction. In the construction according to the invention, vertical loads in the Z-direction are forwarded via a "flexible member", formed from the rib 5, transverse profile 17 and struts 27, 29, in the Y-direction to the sides of the aircraft fuselage. The shear panel of said flexible member is formed by the framework consisting of the struts 27, 29.

## Claims

1. Aircraft fuselage structure which extends along a longitudinal axis (X) and has an outer skin (3) which is provided with a plurality of ribs (5) extending at intervals from one another in planes perpendicular to the longitudinal axis (X) along the outer skin (3),
comprising a floor (7) extending in a plane parallel to the longitudinal axis (X), said floor comprising retaining rails (9) extending parallel to the longitudinal axis (X), between which floor plates (11) are arranged,
comprising support elements (15) which extend in the plane of the ribs (5) between the floor (7) and the ribs (5),
wherein the retaining rails (9) extend across a plurality of support elements (15),
wherein lashing devices (35) are arranged on the retaining rails (9) above the support elements (15), wherein the lashing devices (35) are connected to the support elements (15),
**characterized**
**in that** the retaining rails (9) and the floor plates (11) are fixedly connected together for transmitting loads in the plane of the floor (7),
**in that** the support elements (15) have transverse profiles (17) extending directly below the floor (7) in the planes of the ribs (5), said transverse profiles extending in a linear manner between the ribs (5) between connecting points (19) therewith, on which the retaining rails (9) bear and to which the lashing devices (35) are connected,
**in that** the transverse profiles (17) are at intervals from the ribs (5) between the connecting points (19) on the side thereof facing away from the floor (7) and
**in that** on the side of the transverse profiles (17) facing away from the floor (7), struts (27, 29) extend between the transverse profiles (17) and the ribs (5) in the plane thereof.

2. Aircraft fuselage structure according to Claim 1, wherein first struts (27) extend perpendicularly to the transverse profiles (17) below lashing devices (35) between the transverse profiles (17) and the ribs (5).

3. Aircraft fuselage structure according to one of Claims 1 or 2, wherein second struts (29) extend at an angle of less than 90° between the transverse profile (17) and the ribs (5).

4. Aircraft fuselage structure according to one of Claims 1 to 3, wherein the retaining rails (9) have a base portion (31) extending in the plane of the floor (7) which bears against the transverse profiles (17), and two limbs (33) extending perpendicular to the plane of the floor (7) and connected to the base portion (31),
wherein the lashing devices (35) have a base (37) which is connected at two fastening points to the limbs (33) in the direction of extension of the retaining rails (9), and
wherein the longitudinal central plane (41) of the transverse profiles (17) extends between the fastening points.

5. Aircraft fuselage structure according to Claim 4, wherein the base (37) of the lashing devices (35) is connected to a transverse profile (17) via bolts (43) extending in the longitudinal central plane (41) of the transverse profiles (17), said bolts engaging with the transverse profile (17).

## Patentansprüche

1. Flugzeugrumpfstruktur, die sich entlang einer Längsachse (X) erstreckt und eine Außenhaut (3) aufweist, die mit mehreren Rippen (5) versehen ist, die sich in Abständen zueinander in senkrecht zur Längsachse (X) verlaufenden Ebenen entlang der Außenhaut (3) erstrecken,
die einen Boden (7) umfasst, der sich in einer parallel zur Längsachse (X) verlaufenden Ebene erstreckt, wobei der Boden sich parallel zur Längsachse (X) erstreckende Halteschienen (9) umfasst, zwischen denen Bodenplatten (11) angeordnet sind,
die Stützelemente (15) umfasst, die sich in der Ebene der Rippen (5) zwischen dem Boden (7) und den Rippen (5) erstrecken,
wobei sich die Halteschienen (9) über mehrere Stützelemente (15) hinweg erstrecken,
wobei Verzurrvorrichtungen (35) an den Halteschienen (9) über den Stützelementen (15) angeordnet sind,
wobei die Verzurrvorrichtungen (35) mit den Stützelementen (15) verbunden sind,
**dadurch gekennzeichnet,**
**dass** die Halteschienen (9) und die Bodenplatten (11) zum Übertragen von Lasten in der Ebene des Bodens (7) fest miteinander verbunden sind,
**dass** die Stützelemente (15) Querprofile (17) aufweisen, die sich direkt unter dem Boden (7) in den Ebenen der Rippen (5) erstrecken, wobei sich die Querprofile linear zwischen den Rippen (5) zwischen Verbindungspunkten (19) damit, an denen die Halteschienen (9) anlegen und mit denen die Verzurrvorrichtungen (35) verbunden sind, erstrecken,
**dass** die Querprofile (17) von den Rippen (5) zwischen den Verbindungspunkten (19) auf der Seite davon, die von dem Boden (7) weg weist, beabstandet sind und
**dass** sich auf der Seite der Querprofile (17), die von dem Boden (7) weg weist, Streben (27, 29) zwischen den Querprofilen (17) und Zwischenrippen (5) in der Ebene davon erstrecken.

2. Flugzeugrumpfstruktur nach Anspruch 1, wobei sich die ersten Streben (27) senkrecht zu den Querprofilen (17) unter den Verzurrvorrichtungen (35) zwischen den Querprofilen (17) und den Rippen (5) erstrecken.

3. Flugzeugrumpfstruktur nach einem der Ansprüche 1 oder 2, wobei sich die zweiten Streben (29) in einem Winkel von weniger als 90° zwischen dem Querprofil (17) und den Rippen (5) erstrecken.

4. Flugzeugrumpfstruktur nach einem der Ansprüche 1-3, wobei die Halteschienen (9) einen sich in der Ebene des Bodens (7) erstreckenden Basisabschnitt (31), der an den Querprofilen (17) anliegt, und zwei Schenkel (33), die sich senkrecht zu der Ebene des Bodens (7) erstrecken und mit dem Basisabschnitt (31) verbunden sind, aufweisen,
wobei die Verzurrvorrichtungen (35) eine Basis (37) aufweisen, die an zwei Befestigungspunkten mit den Schenkeln (33) in der Erstreckungsrichtung der Halteschienen (9) verbunden ist, und
wobei die Längsmittelebene (41) der Querprofile (17) zwischen den Befestigungspunkten verläuft.

5. Flugzeugrumpfstruktur nach Anspruch 4, wobei die Basis (37) der Verzurrvorrichtungen (35) mit einem Querprofil (17) über Bolzen (43) verbunden ist, die sich in der Längsmittelebene (41) der Querprofile (17) erstrecken, wobei die Bolzen mit dem Querprofil (17) in Eingriff stehen.

## Revendications

1. Structure de fuselage d'aéronef qui s'étend le long d'un axe longitudinal (X) et présente une peau extérieure (3) qui est munie d'une pluralité de nervures (5) s'étendant à intervalles les unes des autres dans des plans perpendiculaires à l'axe longitudinal (X) le long de la peau extérieure (3),
comprenant un fond (7) s'étendant dans un plan parallèle à l'axe longitudinal (X), ledit fond comprenant des rails de retenue (9) s'étendant parallèlement à l'axe longitudinal (X), entre lesquels sont disposées des plaques (11) de fond,
comprenant des éléments de support (15) qui s'étendent dans le plan des nervures (5) entre le fond (7) et les nervures (5),
dans laquelle les rails de retenue (9) s'étendent sur une pluralité d'éléments de support (15),
dans laquelle des dispositifs d'arrimage (35) sont disposés sur les rails de retenue (9) au-dessus des éléments de support (15),
dans laquelle les dispositifs d'arrimage (35) sont connectés aux éléments de support (15),
**caractérisée**
**en ce que** les rails de retenue (9) et les plaques (11) de fond sont reliés ensemble de manière fixe pour la transmission de charges dans le plan (7) de fond,
**en ce que** les éléments de support (15) présentent des profils transversaux (17) s'étendant directement sous le fond (7) dans les plans des nervures (5), lesdits profils transversaux s'étendant de manière linéaire entre les nervures (5) entre les points de liaison (19) avec celles-ci, sur lesquels reposent les rails de retenue (9) et auxquels sont reliés les dispositifs d'arrimage (35),
**en ce que** les profils transversaux (17) sont espacés des nervures (5) entre les points de liaison (19) sur la face opposée au fond (7), et
**en ce que** sur le côté des profils transversaux (17) opposé au fond (7), des entretoises (27, 29) s'étendent entre les profils transversaux (17) et les nervures (5) dans le plan de ceux-ci.

2. Structure de fuselage d'aéronef selon la revendication 1, dans laquelle les premières entretoises (27) s'étendent perpendiculairement aux profils transversaux (17) sous les dispositifs d'arrimage (35) entre les profils transversaux (17) et les nervures (5).

3. Structure de fuselage d'aéronef selon l'une des revendications 1 ou 2, dans laquelle des deuxièmes entretoises (29) s'étendent à un angle inférieur à 90° entre le profil transversal (17) et les nervures (5).

4. Structure de fuselage d'aéronef selon l'une des revendications 1 à 3, dans laquelle les rails de retenue (9) ont une partie de base (31) s'étendant dans le plan de fond (7) qui s'appuie contre les profils transversaux (17), et deux branches (33) s'étendant perpendiculairement au plan du plancher (7) et reliées à la partie de base (31),
dans laquelle les dispositifs d'arrimage (35) ont une base (37) qui est connectée à deux points de fixation aux branches (33) dans la direction d'extension des rails de retenue (9), et
dans laquelle le plan central longitudinal (41) des profils transversaux (17) s'étend entre les points de fixation.

5. Structure de fuselage d'aéronef selon la revendication 4, dans laquelle la base (37) des dispositifs d'arrimage (35) est reliée à un profil transversal (17) par l'intermédiaire de boulons (43) s'étendant dans le plan central longitudinal (41) des profils transversaux (17), lesdits boulons s'engageant avec le profil transversal (17).
